# EUROPÄISCHE PATENTANMELDUNG

(11) **EP 3 150 293 A1**
(43) Veröffentlichungstag der Anmeldung: **05.04.2017**
(21) Anmeldenummer: 15187568.9
(22) Anmeldetag: 30.09.2015
(51) Int. Cl.: B21B 38/10

(54) **WEGMESSEINRICHTUNG FÜR EINEN HYDRAULISCHEN ZYLINDER**

(71) Anmelder: Primetals Technologies Austria GmbH, 4031 Linz (AT)
(72) Erfinder: Dirisamer, Gernot, 4710 Tollet (AT); Schallauer, Franz, 4540 Bad Hall (AT)
(74) Vertreter: Metals@Linz

(57) **Zusammenfassung**

Die Erfindung betrifft eine Wegmesseinrichtung (14) für einen hydraulischen Zylinder (1,2), vorzugsweise für einen Anstellzylinder,
die Wegmesseinrichtung (14) umfassend ein mit dem hydraulischen Zylinder (1,2) verbindbares Messgehäuse (6), ein im Messgehäuse (6) translatorisch verschiebbar geführtes Führungselement (11), welches Führungselement (11) separat mit dem hydraulischen Zylinder (1,2) verbindbar ist, sowie eine Messeinrichtung mit einem ersten Messelement (7) und einem mit dem ersten Messelement (7) zusammenwirkenden zweiten Messelement (10),
wobei eines der Messelemente (7,10) am Messgehäuse (6) und das andere Messelement (10,7) am Führungselement (11) angebracht ist, um durch die Relativbewegung von Messgehäuse (6) und Führungselement (11) mittels der beiden Messelemente (7,10) eine Wegmessung durchzuführen.

Um eine kontinuierliche und annähernd ruckfreie Wegmessung zu ermöglichen, ist erfindungsgemäß vorgesehen, dass zur Führung des Führungselements (11) im Messgehäuse (6) zwischen Führungselement (11) und Messgehäuse (6) eine Kugelumlaufführung (8) angeordnet ist.

## Beschreibung

### Technisches Gebiet

Die Erfindung betrifft eine Wegmesseinrichtung für einen hydraulischen Zylinder, vorzugsweise für einen Anstellzylinder zum Anstellen einer Walze in einem Walzständer eines Walzgerüsts, die Wegmesseinrichtung umfassend ein mit dem hydraulischen Zylinder verbindbares Messgehäuse, ein im Messgehäuse translatorisch verschiebbar geführtes Führungselement, welches Führungselement separat mit dem hydraulischen Zylinder verbindbar ist, sowie eine Messeinrichtung mit einem ersten Messelement und einem mit dem ersten Messelement zusammenwirkenden zweiten Messelement, wobei eines der Messelemente am Messgehäuse und das andere Messelement am Führungselement angebracht ist, um durch die Relativbewegung von Messgehäuse und Führungselement mittels der beiden Messelemente eine Wegmessung durchzuführen.

### Stand der Technik

Im Bereich der hydraulischen Zylinder, die üblicher Weise einen Zylinder, auch Zylindergehäuse genannt, und einen darin beweglich geführten Kolben umfassen, ist es oftmals notwendig, die exakte Position des Kolbens relativ zum Zylindergehäuse zu bestimmen. Insbesondere wenn es sich beim hydraulischen Zylinder um einen Anstellzylinder zum Anstellen einer Walze in einem Walzständer eines Walzgerüstes handelt, ist die Messung des zurückgelegten Wegs des Anstellzylinders von besonderer Bedeutung, da dadurch die Größe des Walzspalts, welche eine relevante Verfahrensgröße im Walzprozess darstellt, bestimmt wird. Dabei kommt der exakten Wegmessung zu jedem Zeitpunkt eine zentrale Bedeutung zu, da bei einer Zustellbewegung bzw. Rückstellbewegung bereits kleine Messfehler zu einem fehlerhaften Walzprodukt bzw. Band führen können.

Bekannte Wegmesseinrichtungen für hydraulische Zylinder umfassen in der Regel ein Führungselement, welches in einer Führung bzw. in einem Messgehäuse geführt ist, wobei Führungselement und Messgehäuse relativ zueinander verschiebbar sind und eine Messeinrichtung zur Wegmessung. Am Führungselement und am Messgehäuse ist als Messeinrichtung jeweils ein Messelement angebracht, um die Relativbewegung von Führungselement und Messgehäuse zu detektieren. Üblicher Weise sind Führungselement und Messgehäuse über Gleitführungen bzw. Führungsbänder miteinander verbunden, um die translatorische Verschiebbarkeit zu realisieren. Um die Position des hydraulischen Zylinders detektieren zu können ist jeweils das Führungselement oder das Messgehäuse am stillstehenden Teil des hydraulischen Zylinders und das jeweils andere Teil der Wegmesseinrichtung am beweglichen Teil des hydraulischen Zylinders befestigt.

Derartige Wegmesseinrichtungen weisen jedoch eine Reihe von Nachteilen auf, die sich negativ auf die Ergebnisse und Kontinuität der Wegmessung auswirken. So kommt es bei der Bewegung von Gleitführungen zum sogenannten Stick-Slip-Effekt, bei dem sich Phasen von Haftreibung und Gleitreibung abwechseln, sodass es zu ruckhaften Änderungen der Position des Führungselements relativ zur Führung kommt, was direkt auf die Messelemente übertragen wird, sodass die ruckhafte Änderung der Messwerte in einer nachfolgenden Steuerung mit hohem Aufwand ausgeglichen werden muss. Diese ruckhaften Verschiebungen, auch als "ruckeln" bezeichnet, betragen in der Regel zwischen 2 µm und 5 µm.

Ein weiterer Nachteil äußert sich darin, dass Gleitführungen bei einer Verkippung des hydraulischen Zylinders, also einer Schrägstellung des Zylindergehäuses gegenüber dem Kolben von einigen wenigen Grad, ebenfalls verkippen und in der Folge stecken bleiben, also nicht mehr der Bewegung des hydraulischen Zylinders folgen, sodass das Ergebnis der Wegmesseinrichtung fehlerhaft ist.

### Aufgabe der Erfindung

Es ist daher eine Aufgabe der Erfindung die Nachteile des Stands der Technik zu überwinden und eine Wegmesseinrichtung für einen hydraulischen Zylinder vorzuschlagen, welche eine kontinuierliche, exakte und annähernd ruckfreie Wegmessung ermöglicht. Eine weitere Aufgabe der Erfindung besteht darin, die Empfindlichkeit der Wegmesseinrichtung gegenüber einer Verkippung von Führungselement und Messgehäuse zu reduzieren.

### Darstellung der Erfindung

Diese Aufgabe wird durch eine Wegmesseinrichtung für einen hydraulischen Zylinder mit den Merkmalen des Patentanspruchs 1 gelöst. Vorteilhafte Ausgestaltungen der Erfindung sind in den jeweiligen abhängigen Ansprüchen definiert.

Erfindungsgemäß ist dabei in einer Wegmesseinrichtung der eingangs erwähnten Art vorgesehen, dass zur Führung des Führungselements im Messgehäuse zwischen Führungselement und Messgehäuse eine Kugelumlaufführung angeordnet ist. Bei der Kugelumlaufführung handelt es sich um eine lineare Wälzführung, bei der eine Vielzahl an gleichartigen Kugeln zwischen den beiden linear geführten Elementen, also Führungselement und Messgehäuse, angeordnet sind, sodass es zwischen den tragenden Kugeln und der daran vorbeigeführten Fläche des bewegten Elements nur zu einem Punktkontakt und damit zu einer wesentlich geringeren Reibung kommt. Dabei liegen die Kugeln vorzugsweise direkt an der Oberfläche des Führungselements an. Die Kugeln können dabei etwa in mehreren über den Umfang des Führungselements verteilten Kugelbahnen angeordnet sein, wobei die Kugeln üblicher Weise in einem Kugelkäfig aus Kunststoff geführt sind, welcher auch als Kugelrückführung dient. Ist eine Kugelrückführung vorgesehen, so sind zwei Kugelreihen miteinander verbunden, wobei eine Kugelreihe belastet ist und eine tragende Funktion hat, wobei sich die andere Kugelreihe entgegen der Relativbewegung der Linearführung, also zwischen Führungselement und Messgehäuse, bewegt und so unbelastet zum Anfang der Lastzone zurück geführt werden. Durch die Kugelumlaufführung wird der Stick-Slip-Effekt verhindert, sodass keine ruckhafte Änderungen in der Führung mehr auftreten die an die Messelemente weitergegeben wird. Dadurch ist eine kontinuierliche Wegbestimmung möglich, die zuverlässige Messergebnisse liefert und geringeren Rechenbedarf der Steuerung benötigt. Es versteht sich dabei von selbst, dass eine erfindungsgemäße Wegmesseinrichtung für eine Vielzahl unterschiedlicher Einsatzgebiete geeignet ist, bei der eine präzise und kontinuierliche Wegmessung in einer Richtung notwendig ist.

Um geringe Verkippungen der Längsachse des Führungselements in Bezug zur Längsachse des Messgehäuses zu kompensieren, ist in einer Ausführungsvariante der erfindungsgemäßen Wegmesseinrichtung vorgesehen, dass die Kugelumlaufführung im Spiel einstellbar ist. Durch die Einstellbarkeit des Spiels der Kugelumlaufführung ist gewährleistet, dass die Messeinrichtung durch eine von außen einwirkende, beispielsweise durch eine Verkippung des hydraulischen Zylinders bewirkte, geringe Verkippung um einen kleinen Winkel, etwa kleiner als 5°, nicht beeinträchtigt wird bzw. die Messelemente in diesem Zustand keiner mechanischen Belastung, etwa Reibung, in radialer Richtung ausgesetzt sind, da sich die Kugelumlaufführung durch das eingestellte Spiel selbstständig anpasst und die Verkippung ausgleicht.

In einer weiteren Ausführungsvariante der Erfindung ist vorgesehen, dass das erste Messelement als Messsensor und das zweite Messelement als Messstab ausgebildet ist. Bei einem derart ausgebildeten Messsystem bewegt wird die Wegmessung durch die translatorische Verschiebung des Messstabs gegenüber dem Messsensor bewerkstelligt. Dabei kann es sich beispielsweise um ein optisches Messsystem handeln, bei dem der Messstab ein absolutes Koordinatensystem aufweist, welches vom Messsensor detektierbar ist. Alternativ sind natürlich auch elektrische oder magnetische Messsysteme denkbar.

Eine weitere Ausführungsvariante der Erfindung sieht vor, dass der Messstab am Führungselement angebracht ist und der Messsensor am Messgehäuse befestigt ist. Sowohl Messstab als auch Messsensor sind dabei im Inneren des Messgehäuses angeordnet, da jedoch nur der Messsensor im Messgehäuse befestigt ist folgt dieser der Bewegung des Messgehäuses, wobei der Messstab der Bewegung des Führungselements folgt. Dadurch, dass der Messsensor eine Verkabelung aufweist und in der Regel, zumindest in radialer Richtung, mehr Bauraum benötigt als der Messstab, ist die Befestigung des Messsensors im Messgehäuse vorteilhaft und erleichtert die Montage.

Gemäß einer bevorzugten Ausführungsvariante ist vorgesehen, dass das Führungselement als Führungszylinder und die Kugelumlaufführung als Kugelbuchse ausgeführt ist. Während prinzipiell eine Vielzahl an geometrischen Formen für das Führungselement und die daran angepasste Kugelumlaufführung denkbar sind, etwa prismatische Führungselemente mit rechteckigem oder X-förmigen Querschnitt, stellt die Kombination aus dem Führungszylinder, welcher einen kreisförmigen Querschnitt bzw. kreisringförmigen Querschnitt bei der Ausführung als Hohlzylinder aufweist, und der zylindrischer Kugelbuchse, ebenfalls mit einem kreisringförmigen Querschnitt, eine besonders vorteilhafte Kombination, insbesondere im Hinblick auf die Aufnahme von Verkippungen von geringen Winkeln, dar. Die Kugeln der Kugelbuchse rollen dabei einerseits direkt auf der Oberfläche des Führungszylinders und andererseits in den Kugelbahnen bzw. im Kugelkäfig der Kugelbuchse selbst. Die Kugelbuchse umgreift dabei den Führungszylinder in radialer Richtung vollständig und ist mit Dichtmitteln, etwa einem Dichtelement wie einem Dichtring, gegenüber der Umgebung abgedichtet, um das Eindringen von Fremdkörpern in die Kugelbuchse bzw. in das Messgehäuse zu verhindern.

Um das Eindringen von Fremdkörpern, beispielsweise Schmutzpartikeln, Spänen oder Flüssigkeitstropfen, in das Messgehäuse zu erschweren bzw. zu verhindern, womit einerseits die Messeinrichtung geschützt ist und andererseits ein Verschmutzen der Kugelumlaufführung unterbunden wird, ist in einer bevorzugten Ausführungsvariante der erfindungsgemäßen Wegmesseinrichtung vorgesehen, dass im Messgehäuse ein Anschluss für eine Druckluftleitung vorgesehen ist, um im Messgehäuse einen gegenüber der Umgebung erhöhten Druck herzustellen. Durch den im Messgehäuse vorherrschenden Überdruck von zwischen 0,1 bar und 3 bar, bevorzugt zwischen 0,25 bar und 1 bar, insbesondere von 0,5 bar, werden kleinste Fremdkörper, welche selbst durch die Dichtmittel in das Messgehäuse eindringen könnten, am Eindringen gehindert. Es versteht sich von selbst, dass etwaige Öffnungen im Messgehäuse entsprechend verschlossen sein müssen, um die Ausbildung des Überdrucks zu ermöglichen.

Die Erfindung betrifft auch einen hydraulischer Zylinder, vorzugsweise Anstellzylinder zum Anstellen einer Walze in einem Walzständer eines Walzgerüsts, mit einem Zylindergehäuse und einem darin geführten Kolben. Um die eingangs gestellte Aufgabe zu lösen, ist dabei vorgesehen, dass zumindest eine erfindungsgemäße Wegmesseinrichtung am hydraulischen Zylinder angeordnet ist. Durch das Anbringen der erfindungsgemäßen Wegmesseinrichtung am hydraulischen Zylinder, ist es möglich, die Positionsbestimmung des Kolbens relativ zum Zylindergehäuse direkt durch die Wegmesseinrichtung durchzuführen. Dabei ist die Wegmesseinrichtung einerseits am feststehenden Teil des hydraulischen Zylinders und andererseits am beweglichen Teil des hydraulischen Zylinders befestigt, wobei die Längsachse der Messeinrichtung parallel zur gemeinsamen Längsachse des hydraulischen Zylinders ausgerichtet ist. Durch die robuste Bauweise und die hohe Messgenauigkeit und Zuverlässigkeit der Wegmesseinrichtung aufgrund der durch die Kugelumlaufführung bedingten ruckfreien Messung kleinster Bewegungen, ist die Wegmesseinrichtung auch für hydraulische Zylinder die unter widrigen Umweltbedingungen, etwa beim Einsatz von Anstellzylindern in Walzständern von Walzgerüsten, bei hohen Temperaturen und eventuellen Chemikalien in der Umgebungsluft aufgrund einer nachgeschalteten Beizanlage, geeignet und ermöglicht eine einfache und präzise Steuerung der Relativbewegung zwischen Kolben und Zylindergehäuse.

In einer Ausführungsvariante der Erfindung ist vorgesehen, dass die zumindest eine Wegmesseinrichtung nach einer der folgenden Varianten am hydraulischen Zylinder angebracht ist:
a) wobei das Messgehäuse mit dem Kolben und das Führungselement mit dem Zylindergehäuse verbunden ist;
b) wobei das Messgehäuse mit dem Zylindergehäuse und das Führungselement mit dem Kolben verbunden ist. Da für den Fachmann verschiedene Varianten denkbar sind einen hydraulischen Zylinder zu gestalten, wobei entweder der Kolben still steht und sich das Zylindergehäuse bewegt oder aber das Zylindergehäuse still steht und sich der Kolben bewegt, gibt es verschiedene Möglichkeiten die Wegmesseinrichtung an den Komponenten des hydraulischen Zylinders anzubringen. Essentiell ist es jedoch, dass Führungselement und Messgehäuse mit verschiedenen Komponenten des hydraulischen Zylinders verbunden sind, sodass sich bei einer Relativbewegung von Kolben und Zylindergehäuse auch Führungselement und Messgehäuse in gleicher Art und Weise relativ zueinander bewegen. Es hat sich dabei als besonders vorteilhaft heraus gestellt, wenn das Führungselement am stillstehenden Teil und das Messgehäuse am bewegten Teil des hydraulischen Zylinders angebunden sind.

Gemäß einer weiteren Ausführungsvariante der Erfindung ist vorgesehen, dass das Messgehäuse über zumindest eine Konsole starr am hydraulischen Zylinder befestigt ist. Durch eine starre Verbindung zwischen Messgehäuse der Wegmesseinrichtung und dem hydraulischen Zylinder, also entweder Kolben oder Zylindergehäuse, werden etwaige verformungsbedingte Messfehler reduziert. Eine derartige Anbindung kann beispielsweise über zwei oder mehr an einer Deckplatte des Kolbens befestigte Konsolen, wobei die Befestigung etwa mittels Schweißnähte oder Schraubverbindungen erfolgt, erreicht werden. Dabei sind alle Elemente konstruktiv derart auszulegen, dass sie eine hohe Biegesteifigkeit aufweisen und sind bevorzugt aus Metall, insbesondere aus Stahl oder Edelstahl, gefertigt.

Eine weitere Ausführungsvariante des erfindungsgemäßen hydraulischen Zylinders sieht vor, dass das Führungselement über eine Koppelstange am hydraulischen Zylinder befestigt ist. Bei der Koppelstange handelt es sich um einen stangenförmigen Körper, beispielsweise mit quadratischem, rechteckigem oder kreisrunden Querschnitt, welcher sich im Einbauzustand parallel zur Längsachse der Wegmesseinrichtung bzw. zur gemeinsamen Längsachse des hydraulischen Zylinders erstreckt. Durch die Koppelstange ist die Wegmesseinrichtung in einfacher Art und Weise mit dem hydraulischen Zylinder verbindbar, wobei die Koppelstange etwa an einem mit dem Zylindergehäuse verbundenen Galgen befestigt sein kann.

Um die Messeinheit der Wegmesseinrichtung vor mechanischen Belastungen zu schützen, welche aus einer, beispielsweise größeren, Verkippung des Kolbens im Zylindergehäuse resultiert und üblicher Weise über die Befestigung der Wegmesseinrichtung direkt an Messgehäuse und Führungselement übertragen wird, sodass die Messelemente in radialer Richtung aneinander stoßen bzw. reiben, ist in einer bevorzugten Ausführungsvariante der Erfindung vorgesehen, dass die Koppelstange derart gestaltet ist, dass sich die Koppelstange bei einer Verkippung von Kolben und Zylindergehäuse elastisch verformt. Dies kann beispielsweise dadurch erreicht werden, dass das axiale Widerstandsmoment um die Längsachse der Koppelstange klein ist, sodass es bei einem aus der Verkippung resultierenden Biegemoment zu einer elastischen Verformung der Koppelstange kommt. Das axiale Widerstandsmoment lässt sich insbesondere durch einen geringen Durchmesser bzw. eine kleines Flächenträgheitsmoment der Koppelstange reduzieren. Aufgrund der elastischen Verformung der Koppelstange ändert sich die Position der Messelemente der Messeinrichtung in radialer Richtung nicht. Wird der hydraulische Zylinder in eine Ausgangsstellung zurück bewegt, um die Verkippung zu korrigieren, kehrt die Koppelstange aufgrund der lediglich elastischen Verformung wieder in ihre ursprüngliche, unverformte Form zurück.

In einer weiteren bevorzugten Ausführungsvariante der Erfindung ist vorgesehen, dass die zumindest eine Wegmesseinrichtung über einen am Zylindergehäuse befestigten Galgen und eine am Kolben befestigte Deckplatte radial außerhalb des Zylindergehäuses angeordnet ist. Um die Wegmesseinrichtung in radialer Richtung, bezogen auf die Längsachse des hydraulischen Zylinders, außerhalb des Zylinders anordnen zu können, sodass die Wartung erleichtert wird und keine baulichen Maßnahmen im hydraulischen Zylinder selbst vorgenommen werden müssen, ist ein angepasste Konstruktion zur Befestigung der Messeinrichtung notwendig. Diese Befestigungskonstruktion umfasst einerseits einen Galgen, welcher am Zylindergehäuse befestigt ist und sich abschnittsweise normal zur Längsachse des hydraulischen Zylinders nach außen erstreckt. In einer Ausführung der Erfindung ist dabei die das Führungselement mit dem hydraulischen Zylinder verbindende Koppelstange am Galgen befestigt. Weiters umfasst die Befestigungskonstruktion eine am Kolben befestigte Deckplatte, welche den Kolben vorzugsweise auf der dem Zylindergehäuse entgegengesetzten Seite abschließt und auch zur Befestigung des Kolbens am Walzständer dienen kann. Auch die Deckplatte überragt den hydraulischen Zylinder abschnittsweise in radialer Richtung. In einer weiteren Ausführung der Erfindung sind die am Messgehäuse befestigten Konsolen an der Deckplatte angebunden, etwa über eine Schraubverbindung oder über eine Schweißverbindung.

Um eine Verkippung des Kolbens im Bezug zum Zylindergehäuse detektieren zu können und eine Rotationsbewegung zwischen Messgehäuse und Führungselement zu verhindern, ist in einer weiteren besonders bevorzugten Ausführungsvariante des hydraulischen Zylinders vorgesehen, dass zwei Wegmesseinrichtungen am hydraulischen Zylinder angeordnet sind, wobei die Wegmesseinrichtungen beidseitig am hydraulischen Zylinder angeordnet sind. Durch die beiden Wegmesseinrichtungen ist bei einer Differenz zwischen den Messergebnissen der Wegmessungseinrichtungen eine Verkippung detektierbar. Aufgrund der erfindungsgemäßen Gestaltung der Wegmesseinrichtung kommt es jedoch trotz Verkippung nicht zu einem "Steckenbleiben" der Messelemente. Insbesondere wenn eine elastisch verformbare Koppelstange eingesetzt wird, ist eine Beschädigung oder Beeinträchtigung der Wegmesseinrichtung nicht mehr möglich, vielmehr kann bei der Überschreitung eines oberen Grenzwertes der Differenz der Messergebnisse eine Rückstellbewegung des hydraulischen Zylinders ausgelöst werden, um die Verkippung zu korrigieren. Unter beidseitig ist dabei zu verstehen, dass jeweils eine Wegmesseinrichtung auf einer Seite des hydraulischen Zylinders angeordnet ist, wobei die Seiten durch eine gedachte, durch die Längsachse des hydraulischen Zylinders verlaufende, Teilungsebene definiert sind.

Eine weitere besonders bevorzugte Ausführungsvariante sieht weiters vor, dass die Wegmesseinrichtungen um 180° um eine Längsachse des hydraulischen Zylinders gegeneinander versetzt sind. Dadurch dass sich die Wegmesseinrichtungen genau gegenüberliegen, lässt sich eine Verkippung des hydraulischen Zylinders besonders einfach und mit geringem Rechenaufwand detektieren, insbesondere sind die Wegmesseinrichtungen dabei derart am hydraulischen Zylinder angeordnet, dass die Längsachsen der Wegmesseinrichtungen in jener Ebene angeordnet sind, in welcher die Verkippung mit der größten Wahrscheinlichkeit auftritt.

Besonders vorteilhaft ist die Verwendung eines erfindungsgemäßen hydraulischen Zylinders als Anstellzylinder in einem Walzgerüst. Da zur Einstellung und Regelung des Walzspaltes eines Walzgerüsts besonders genaue und zuverlässige Positionsdaten erforderlich sind und sich bereits ein kleiner Ruck während des Messvorgangs negativ auf das im Walzgerüst produzierte Band auswirkt, bewirkt die Verwendung einer erfindungsgemäßen und robusten Wegmesseinrichtung, welche die Positionsdaten des hydraulischen Zylinders misst, eine Verbesserung der Produktionsqualität bei gleichzeitiger Reduktion des Regelungsaufwands. Insbesondere in Verbindung mit der erfindungsgemäßen Befestigung der Wegmesseinrichtung am hydraulischen Zylinder ergeben sich besonders positive Synergieeffekte. So kann durch die exakte und ruckfreie Messung der Positionsdaten des hydraulischen Zylinders eine Zustellbewegung oder Rückstellbewegung der Walze genau geregelt werden. Daher betrifft die Erfindung auch die Verwendung eines erfindungsgemäßen hydraulischen Zylinders als Anstellzylinder zum Anstellen einer Walze in einem Walzständer eines Walzgerüsts, wobei die Positionierung der Walze im Walzständer, insbesondere während einer Zustellbewegung oder einer Rückstellbewegung der Walze, über von der Wegmesseinrichtung laufend gemessene Positionsdaten geregelt wird.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine Ausführungsvariante eines erfindungsgemäßen hydraulischen Zylinders mit zwei Wegmesseinrichtungen in einem Teilschnitt gemäß Linie BB in Fig. 1a;
- Fig. 1a: Schnittdarstellung des hydraulischen Zylinders gemäß Linie AA in Fig. 1;
- Fig. 2: eine Detaildarstellung einer erfindungsgemäßen Wegmesseinrichtung aus Fig. 1 im Schnitt.

### Ausführung der Erfindung

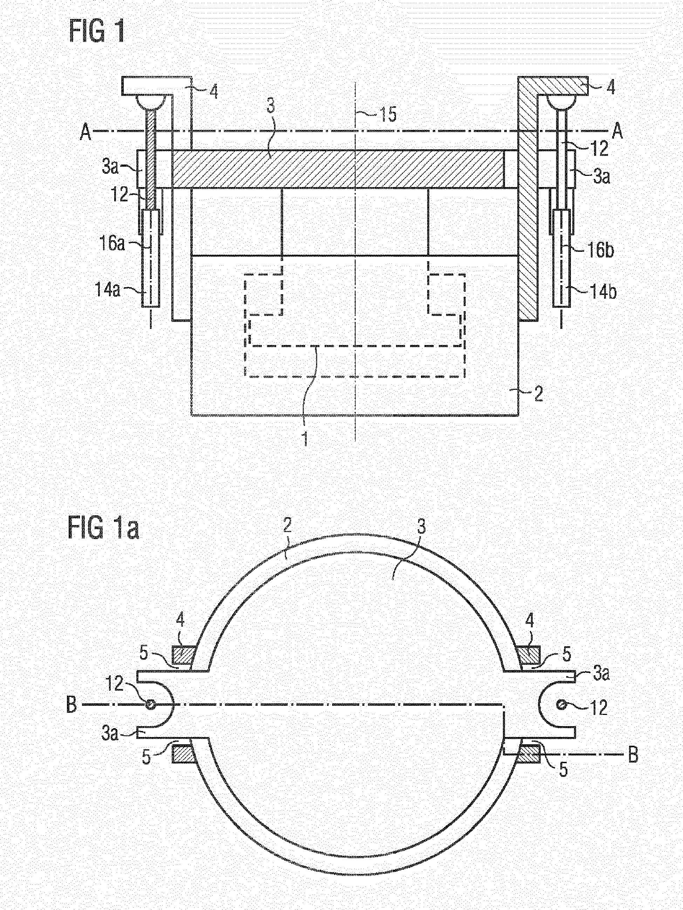

Figur 1 zeigt einen hydraulischen Zylinder 1,2 der ein Zylindergehäuse 2 und einen darin geführten Kolben 1 umfasst, wobei Kolben 1 und Zylindergehäuse 2 eine gemeinsame Längsachse 15 ausbilden, entlang derer die beiden Elemente translatorisch gegeneinander verschiebbar sind. Um die an sich bekannte Funktionsweise des hydraulischen Zylinders 1,2 zu verdeutlichen, sind die Druckkammern im Zylindergehäuse 2 und die Druckflächen des Kolbens 1, die im Inneren des Zylindergehäuses 2 liegen, strichliert dargestellt. Der Kolben 1 ragt dabei aus dem Zylindergehäuse 2 in Richtung der gemeinsamen Längsachse 15 heraus und ist endseitig mit einer Deckplatte 3 versehen, welche den hydraulischen Zylinder 1,2 in radialer Richtung, bezogen auf die gemeinsame Längsachse 15, überragt. Am Zylindergehäuse 2 ist ein Galgen 4 befestigt, welcher einen ersten Abschnitt umfasst, der sich parallel zur gemeinsamen Längsachse 15 erstreckt, und einen zweiten Abschnitt, der sich normal zur gemeinsamen Längsachse 15 vom Zylindergehäuse 2 nach außen erstreckt. Dabei ist der zweite Abschnitt des Galgens 4 oberhalb der Deckplatte 3 angeordnet. Um eine Relativbewegung zwischen Deckplatte 3 und Galgen 4 zu ermöglichen, sind Führungstaschen 5 vorgesehen, welche in Figur 1a deutlich zu erkennen sind. Auf beiden Seiten des hydraulischen Zylinders 1,2 ist ein radial über das Zylindergehäuse 2 hinausragende Teil 3a der Deckplatte 3 ausgebildet der in den Führungstaschen 5 geführt ist.. Um diesen Sachverhalt zu verdeutlichen ist die Deckplatte 3 zum Teil im Schnitt dargestellt, während im Bereich des rechten Galgens 4 der Galgen 4 geschnitten ist und der über das Zylindergehäuse 2 hinausragende Teil 3a der Deckplatte 3 hinter der Schnittebene liegt. Der Übersicht halber sind die übrigen Elemente des hydraulischen Zylinders 1,2 nicht geschnitten.

Bei dem hydraulischen Zylinder 1,2 kann es sich dabei beispielsweise um einen Anstellzylinder zum Anstellen einer Walze in einem Walzständer eines Walzgerüsts handeln, mittels dem der Walzspalt des Walzgerüsts einstellbar ist. Im vorliegenden Fall ist dabei der Kolben 1, beispielsweise über die Deckplatte 3 starr mit dem Walzständer verbunden und steht damit still, sodass sich bei einer Zustellbewegung oder einer Rückstellbewegung das Zylindergehäuse 2 als bewegter Teil relativ zum Kolben 1 entlang der gemeinsamen Längsasche 15 translatorisch verschiebt. Dadurch kommt es auch zu einer entsprechenden Relativbewegung zwischen Galgen 4 und Deckplatte 3.

Um die Relativbewegung zwischen Kolben 1 und Zylindergehäuse 2 zu messen, ist auf beiden Seiten des hydraulischen Zylinders 1,2 jeweils eine Wegmesseinrichtung 14a,b angeordnet, wobei die Längsachsen 16a,b der Wegmesseinrichtungen 14a,b parallel zur gemeinsamen Längsachse 15 verlaufen. Die Wegmesseinrichtungen 14a,b sind dabei jeweils sowohl am Kolben 1 als auch am Zylindergehäuse 2 angebracht, wobei im vorliegenden Ausführungsbeispiel die Befestigung am Kolben 1 über die Deckplatte 3 erfolgt und die Befestigung am Zylindergehäuse 2 über eine am Galgen 4 befestigte Koppelstange 12. Der genaue Aufbau der Wegmesseinrichtungen 14a,b wird in der Folge genauer erläutert.

Es versteht sich für den Fachmann von selbst, dass die Funktionsweise des hydraulischen Zylinders 1,2 bei entsprechenden konstruktiven Änderungen auch umgekehrt möglich ist, also das Zylindergehäuse 2 still steht und sich der Kolben 1 als bewegter Teil gegenüber dem Zylindergehäuse 2 verschiebt.

Figur 1a zeigt den hydraulischen Zylinder 1,2 in einer Ansicht von oben, wobei der Galgen 4 unterhalb seines zweiten, sich radial nach außen erstreckenden Abschnitts geschnitten wurde, um die Führungstaschen 5 und den radial über das Zylindergehäuse 2 hinausragenden Teil 3a der Deckplatte 3 darstellen zu können. Während die Deckplatte 3 einen im Wesentlichen kreisrunden, dem Zylindergehäuse 2 entsprechenden, Umfang aufweist, sind die sich radial nach außen erstreckenden Teile 3a im Wesentlichen rechteckig ausgebildet und weisen in ihren Endbereichen eine U-förmige Ausnehmung auf, durch welche die Koppelstange 12 verläuft. Da der Galgen 4 im ersten, sich parallel zur gemeinsamen Längsachse 15 erstreckenden Abschnitt geteilt ausgeführt ist, sind die Führungstaschen 5 durch den ersten Abschnitt des Galgens 4 ausgebildet. Die Befestigung der Wegmesseinrichtungen 14a,b an der Deckplatte 3 erfolgt dabei in der Regel an den sich radial nach außen erstreckenden Teilen 3a der Deckplatte 3.

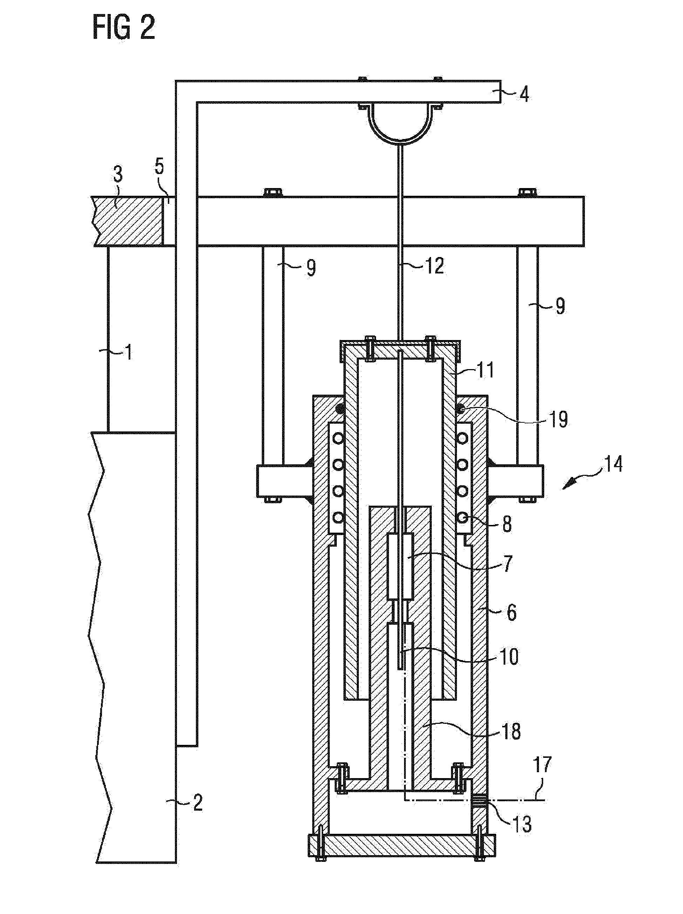

In Figur 2 ist die erfindungsgemäße Wegmesseinrichtung 14, hier die rechte Wegmesseinrichtung 14b die baugleich zur linken Wegmesseinrichtung 14a ausgebildet ist, weswegen in der Folge auf eine Unterscheidung der beiden Wegmesseinrichtungen 14a,b verzichtet wird, dargestellt.

Die Wegmesseinrichtung 14 umfasst dabei ein Messgehäuse 6 und ein Führungselement 11, welches im Messgehäuse 6 translatorisch entlang der Längsachse 16 (siehe Fig. 1) verschiebbar geführt ist, wobei das Messgehäuse 6 eine Führungsöffnung zur Aufnahme des Führungselements 11 aufweist. Im Messgehäuse 6 ist eine Messeinrichtung angeordnet, die ein erstes Messelement 10 und ein zweites Messelement 7 umfasst, wobei die beiden Messelemente zur Wegbestimmung zusammenwirken. Im vorliegenden Ausführungsbeispiel ist das erste Messelement 7 als Messsensor 7 und das zweite Messelement 10 als Messstab 10 ausgebildet, wobei der Einfachheit halber die Bezugszeichen 7 und 10 in der Folge, entsprechend dem vorliegenden Ausführungsbeispiel, einerseits dem Messsensor 7 und andererseits dem Messstab 10 zugeordnet sind. Es versteht sich dabei von selbst, dass bei anderen Messverfahren die Messelemente unterschiedlich ausgebildet sind. Der Messstab 10 ist dabei durch den Messsensor 7 geführt, wobei sich in radialer Richtung ein Spalt zwischen Messstab 10 und Messsensor 7 ausbildet. Verschiebt sich der Messstab 10 gegenüber dem Messsensor 7, so wird die Verschiebung im vorliegenden Ausführungsbeispiel über ein optisches Messverfahren, bei dem ein absolutes Koordinatensystem am Messstab 10 aufgebracht ist und die Verschiebung vom Messsensor 7 detektiert wird, bestimmt und die entsprechende Information, beispielsweise über eine Anschlussleitung 17, an eine nicht dargestellte Steuerung weitergeleitet. Es versteht sich dabei von selbst, dass die Messeinrichtung alternativ auch als elektrische oder magnetische Messeinrichtung ausgebildet sein kann und die beide zusammenwirkenden Messelemente entsprechend gestaltet sind.

Um die Verschiebung von Kolben 1 und Zylindergehäuse 2 über die Wegmesseinrichtung 14 messbar zu machen, ist das Messgehäuse 6 über zwei Konsolen 9 bzw. über zwei Paar Konsolen 9 starr mit der Deckplatte 3 des Kolbens 1 verbunden und in Richtung des Zylindergehäuses 2 von der Deckplatte 3 beabstandet. Das Führungselement 11 ist hingegen über eine Koppelstange 12 mit dem am Zylindergehäuse 2 befestigten Galgen 4 verbunden. Bei einer Relativbewegung zwischen Kolben 1 und Zylindergehäuse 2 folgt also das Führungselement 11 der Bewegung des Zylindergehäuses 2 und das Messgehäuse 6 der Bewegung des Kolbens 1.

Im vorliegenden Ausführungsbeispiel ist der Messstab 10 am Führungselement 11 befestigt während der Messsensor 7, hier über eine sich in Richtung des Führungselements 11 erstreckende Messaufnahme 18, am Messgehäuse 6 befestigt ist. Zur Führung des Führungselements 11 in der entsprechenden Führungsöffnung des Messgehäuses 6 ist zwischen Führungselement 11 und Messgehäuse 6 eine Kugelumlaufführung 8 die als lineare Wälzführung fungiert angeordnet. Durch die Kugelumlaufführung 8, die lediglich schematisch dargestellt ist und in der Regel neben den einzelnen Kugeln auch Kugelkäfige und Kugelrückführungen aufweist, stellt sich zwischen den einzelnen Kugeln und der Oberfläche des Führungselements 11 auf der die Kugeln abrollen nur ein Punktkontakt ein, sodass die Reibung bei der translatorischen Verschiebung minimiert wird und das Auftreten eines Stick-Slip-Effekts verhindert wird. Dadurch ist gewährleistet, dass durch die Messeinrichtung jederzeit zuverlässig die genaue Relativposition des Kolbens 1 und des Zylindergehäuses 2 bestimmbar ist, was insbesondere bei einem Anstellzylinder einen wesentlichen Vorteil gegenüber dem Stand der Technik darstellt.

Kommt es zu einer Verkippung des hydraulischen Zylinders 1,2 oder mit anderen Worten bilden die Längsachsen von Kolben 1 und Zylindergehäuse 2 keine gemeinsame Längsachse 15 mehr aus, sondern sind winkelig zueinander versetzt, etwa um 0,5° bis 5°, so können kleine Verkippungen dadurch kompensiert werden, dass die Kugelumlaufführung 8 im Spiel, insbesondere im radialen Spiel, einstellbar ist. Dadurch ist jedenfalls sichergestellt, dass sich Führungselement 11 und Messgehäuse 6 trotz einer kleinen Verkippung des hydraulischen Zylinders 1,2 weiterhin parallel zur Längsachse 16 verschieben, sodass sich die Position des Messstabs 10 und des Messsensors 7 in radialer Richtung nicht verändert und es somit zu keinem mechanische Reibkontakt zwischen Messstab 10 und Messsensor 7 kommt. Mit anderen Worten wird somit eine Verkippung der Wegmesseinrichtung 14 oder ein Steckenbleiben des Führungselements 11 verhindert. Grundsätzlich sind eine Vielzahl an unterschiedlichen Querschnitten für das Führungselement 11 denkbar, etwa polygonale, quadratische, rechteckige oder X-förmige, im vorliegenden Ausführungsbeispiel ist der Querschnitt jedoch kreisrund, sodass das Führungselement 11 als hohler, jedoch am oberen Ende abgeschlossener Führungszylinder ausgebildet ist, der die Messaufnahme 18 zumindest abschnittsweise umgibt. Dementsprechend ist auch die Kugelumlaufführung 8 als Kugelbuchse ausgeführt, welche im Messgehäuse 6 im Bereich der Führungsöffnung befestigt ist. Um die Kugelumlaufführung 8 und das Innere des Messgehäuses 6 vor Umwelteinflüssen, insbesondere vor Verschmutzung und Fremdkörpern, zu schützen, ist an der Führungsöffnung ein Dichtelement 19 vorgesehen, genauer ein Dichtring. Die Gestaltung der Aufnahme der Kugelumlaufführung 8 im Messgehäuse 6 ist lediglich schematisch dargestellt, wobei es sich von selbst versteht, dass das Dichtelement 19 in einem die Kugelbuchse fixierenden Deckel des Messgehäuses 6 oder aber in der Kugelbuchse selbst angeordnet sein kann. Um auch das Eindringen von kleinsten Partikeln bzw. von Flüssigkeiten in das Messgehäuse 6 bzw. in die Kugelumlaufführung 8 zu unterbinden, ist der Innenraum des Messgehäuses 6 über einen Anschluss 13, der im vorliegenden Fall auch zur Durchführung der Anschlussleitung 17 dient, mit einer nicht dargestellten Druckluftleitung verbindbar, um einen Überdruck im Messgehäuse 6 herstellen zu können. Es ist natürlich genauso denkbar, dass die Durchführung der Anschlussleitung 17 über eine abgedichtete PG-Verschraubung erfolgt und der Anschluss 13 für die Druckluftzufuhr separat angeordnet ist.

Der Messbereich der Wegmesseinrichtung 14 ist über die Länge des Führungselements 11 bzw. des Messstabs 10 beschränkt, wobei in einer ersten Extremposition das Führungselement 11 fast vollständig im Messgehäuse 6 aufgenommen ist und das obere Ende des Messstabs 10 den geringsten Abstand vom Messsensor 7 aufweist und in der zweiten Extremposition das untere Ende des Führungselements 11 den geringsten Abstand zum unteren Ende Kugelumlaufführung 8 aufweist und sich das untere Ende des Messstabs 10 noch zumindest abschnittsweise im Messsensor 7 befindet. Über die Dimensionierung der Längen von Messstab 10 und Messgehäuse 6 bzw. Führungselement 11 lassen sich dabei beliebige Messbereiche einstellen.

Wie bereits zuvor beschrieben ist das Führungselement 11 über die Koppelstange 12 mit dem Galgen 4 verbunden. Die Koppelstange 12 übernimmt jedoch auch eine Sicherheitsfunktion zum Schutz der Messeinrichtung, die Koppelstange 12 ist nämlich derart gestaltet, dass sie sich bei einer Verkippung von Kolben 1 und Zylindergehäuse 2, insbesondere bei größeren Verkippungen die nicht durch das einstellbare Spiel der Kugelumlaufführung 8 ausgeglichen werden können, elastisch verformt. Dies kann insbesondere dadurch erreicht werden, dass das axiale Widerstandsmoment bzw. das axiale Flächenträgheitsmoment der Koppelstange 12 klein ist, sodass sich die Koppelstange 12 aufgrund eines aus der Verkippung resultierenden Biegemoments elastisch verformt. Durch die elastische Verformung der Koppelstange 12 ändert sich trotz einer Verkippung des hydraulischen Zylinders 1,2 der radiale Abstand zwischen Messstab 10 und Messsensor 7 nicht, sodass Messstab 10 und Messsensor 7 auch bei einer Verkippung nicht kollidieren bzw. aneinander reiben.

Wie in Figur 1 zu sehen ist, sind zwei Wegmesseinrichtungen 14a,b am hydraulischen Zylinder 1,2 angebracht, die um 180° um die gemeinsame Längsachse 15 versetzt sind und damit genau gegenüber liegend angeordnet sind. Kommt es zu einer Verkippung des hydraulischen Zylinders 1,2, der durch die elastische Verformung der Koppelstangen 12 ausgeglichen wird, so ergibt sich eine Differenz zwischen den Messergebnissen der beiden Wegmesseinrichtungen 14a,b. Überschreitet die Differenz einen definierbaren Grenzwert, so wird der hydraulischen Zylinder 1,2 eingefahren, also in eine Nullposition zurück bewegt, sodass sich die Koppelstangen 12 wieder in ihre ursprüngliche Form zurück formen und bei einer erneuten Zustellbewegung des hydraulischen Zylinders 1,2 differenzlose Messergebnisse liefern.

Die obigen Ausführungen beziehen sich insbesondere auf die in den Figuren abgebildete, bevorzugte Ausführungsvariante der Erfindung. Es ist jedoch auch eine Vielzahl anderer Konstruktionen denkbar, ohne dabei den Rahmen der Erfindung zu verlassen. Insbesondere ist es in alternativen Ausführungsvarianten denkbar, dass der Messsensor 7 am Führungselement 11 befestigt ist und der Messstab 10 am Messgehäuse 6 oder dass das Messgehäuse 6 mit dem Zylindergehäuse 2 und das Führungselement 11 mit dem Kolben 1 verbunden ist. Ebenso denkbar ist eine beliebige Kombination der zuvor genannten Varianten.

### Bezugszeichenliste:

- 1: Kolben
- 2: Zylindergehäuse
- 3: Deckplatte
- 4: Galgen
- 5: Führungstasche
- 6: Messgehäuse
- 7: Messsensor, erstes Messelement
- 8: Kugelumlaufführung
- 9: Konsole
- 10: Messstab, zweites Messelement
- 11: Führungselement
- 12: Koppelstange
- 13: Anschluss
- 14: Wegmesseinrichtung
- 15: gemeinsame Längsachse des hydraulischen Zylinders 12
- 16: Längsachse der Wegmesseinrichtung 14
- 17: Anschlussleitung
- 18: Messaufnahme
- 19: Dichtelement

## Patentansprüche

1. Wegmesseinrichtung (14) für einen hydraulischen Zylinder (1,2), vorzugsweise für einen Anstellzylinder zum Anstellen einer Walze in einem Walzständer eines Walzgerüsts,
die Wegmesseinrichtung (14) umfassend ein mit dem hydraulischen Zylinder (1,2) verbindbares Messgehäuse (6), ein im Messgehäuse (6) translatorisch verschiebbar geführtes Führungselement (11), welches Führungselement (11) separat mit dem hydraulischen Zylinder (1,2) verbindbar ist, sowie eine Messeinrichtung mit einem ersten Messelement (7) und einem mit dem ersten Messelement (7) zusammenwirkenden zweiten Messelement (10),
wobei eines der Messelemente (7,10) am Messgehäuse (6) und das andere Messelement (10,7) am Führungselement (11) angebracht ist, um durch die Relativbewegung von Messgehäuse (6) und Führungselement (11) mittels der beiden Messelemente (7,10) eine Wegmessung durchzuführen,
**dadurch gekennzeichnet, dass**
zur Führung des Führungselements (11) im Messgehäuse (6) zwischen Führungselement (11) und Messgehäuse (6) eine Kugelumlaufführung (8) angeordnet ist.

2. Wegmesseinrichtung (14) nach Anspruch 1, **dadurch gekennzeichnet, dass** die Kugelumlaufführung (8) im Spiel einstellbar ist.

3. Wegmesseinrichtung (14) nach Anspruch 1 oder 2, **dadurch gekennzeichnet, dass** das erste Messelement (7) als Messsensor und das zweite Messelement (10) als Messstab ausgebildet ist.

4. Wegmesseinrichtung (14) nach Anspruch 3, **dadurch gekennzeichnet, dass** der Messstab am Führungselement (11) angebracht ist und der Messsensor am Messgehäuse (6) befestigt ist.

5. Wegmesseinrichtung (14) nach einem der Ansprüche 1 bis 4, **dadurch gekennzeichnet, dass** das Führungselement (11) als Führungszylinder und die Kugelumlaufführung (8) als Kugelbuchse ausgeführt ist.

6. Wegmesseinrichtung (14) nach einem der Ansprüche 1 bis 5, **dadurch gekennzeichnet, dass** im Messgehäuse (6) ein Anschluss (13) für eine Druckluftleitung vorgesehen ist, um im Messgehäuse (6) einen gegenüber der Umgebung erhöhten Druck herzustellen.

7. Hydraulischer Zylinder (1,2), vorzugsweise Anstellzylinder zum Anstellen einer Walze in einem Walzständer eines Walzgerüsts, mit einem Zylindergehäuse (2) und einem darin geführten Kolben (1), **dadurch gekennzeichnet, dass** zumindest eine Wegmesseinrichtung (14) nach einem der Ansprüche 1 bis 6 am hydraulischen Zylinder (1,2) angeordnet ist.

8. Hydraulischer Zylinder (1,2) nach Anspruch 7, **dadurch gekennzeichnet, dass** die zumindest eine Wegmesseinrichtung (14) nach einer der folgenden Varianten am hydraulischen Zylinder angebracht ist:
a) wobei das Messgehäuse (6) mit dem Kolben (1) und das Führungselement (11) mit dem Zylindergehäuse (2) verbunden ist;
b) wobei das Messgehäuse (6) mit dem Zylindergehäuse (2) und das Führungselement (11) mit dem Kolben (1) verbunden ist.

9. Hydraulischer Zylinder (1,2) nach Anspruch 8, **dadurch gekennzeichnet, dass** das Messgehäuse (6) über zumindest eine Konsole (9) starr am hydraulischen Zylinder (1,2) befestigt ist.

10. Hydraulischer Zylinder (1,2) nach Anspruch 8 oder 9, **dadurch gekennzeichnet, dass** das Führungselement (11) über eine Koppelstange (12) am hydraulischen Zylinder befestigt ist.

11. Hydraulischer Zylinder (1,2) nach Anspruch 10, **dadurch gekennzeichnet, dass** die Koppelstange (12) derart gestaltet ist, dass sich die Koppelstange (12) bei einer Verkippung von Kolben (1) und Zylindergehäuse (2) elastisch verformt.

12. Hydraulischer Zylinder (1,2) nach einem der Ansprüche 7 bis 11, **dadurch gekennzeichnet, dass** die zumindest eine Wegmesseinrichtung (14) über einen am Zylindergehäuse (2) befestigten Galgen (4) und eine am Kolben (1) befestigte Deckplatte (3) radial außerhalb des Zylindergehäuses (2) angeordnet ist.

13. Hydraulischer Zylinder (1,2) nach einem der Ansprüche 7 bis 12, **dadurch gekennzeichnet, dass** zwei Wegmesseinrichtungen (14a,b) am hydraulischen Zylinder (1,2) angeordnet sind, wobei die Wegmesseinrichtungen (14a,b) beidseitig am hydraulischen Zylinder (1,2) angeordnet sind.

14. Hydraulischer Zylinder (1,2) nach Anspruch 13, **dadurch gekennzeichnet, dass** die Wegmesseinrichtungen (14a,b) um 180° um eine Längsachse (15) des hydraulischen Zylinders (1,2) gegeneinander versetzt sind.

15. Verwendung eines hydraulischen Zylinders (1,2) nach einem der Ansprüche 7 bis 14 als Anstellzylinder zum Anstellen einer Walze in einem Walzständer eines Walzgerüsts, wobei die Positionierung der Walze im Walzständer, insbesondere während einer Zustellbewegung oder einer Rückstellbewegung der Walze, über von der Wegmesseinrichtung (14) laufend gemessene Positionsdaten geregelt wird.
